# EUROPEAN PATENT APPLICATION

(11) **EP 2 455 206 A1**
(43) Date of publication of application: **23.05.2012**
(21) Application number: 10799579.7
(22) Date of filing: 01.07.2010
(51) Int. Cl.: B29C 45/14, B29C 33/14, B29C 45/26, B65D 1/00, B29L 22/00

(54) **RESIN MOLDING DEVICE, METHOD OF MANUFACTURING RESIN MOLDING, HOLLOW MOLDING, AND CONTAINER**

(30) Priority: 15.07.2009 JP 2009166344
(71) Applicant: Du Pont-Mitsui Polychemicals Co., Ltd., Tokyo 105-7117 (JP)
(72) Inventor: YAMAMOTO, Sadaki, Ichihara-shi Chiba 299-0108 (JP); OOGI, Kazuyuki, Ichihara-shi Chiba 299-0108 (JP)
(74) Representative: Gulde Hengelhaupt Ziebig & Schneider
(86) International application number: PCT/JP2010/004329
(87) International publication number: WO 2011/007515

(57) **Abstract**

The resin molding apparatus (200) is capable of rotatably support, around an axis of a neck portion (2), a hollow molded product having a main body having a form of a container and the cylindrical neck portion (2). A pinched portion (4), which is pinched by neck portion pinching parts (13, 14) of metallic mold members (11, 12) of the apparatus (200), is formed around the neck portion (2). An outer profile of the pinched portion (4) around the axis of the neck portion (2) is a non-circular profile. An integrated inner profile of the mated neck portion pinching parts (13, 14) is a profile along an outer profile of the pinched portion (4). When the neck portion pinching parts (13, 14) pinch the pinched portion (4), the neck portion pinching parts (13, 14) push the pinched portion (4) to rotate the hollow molded product, thereby correcting the rotation angle around the axis.

## Description

### TECHNICAL FIELD

The present invention relates to a resin molding apparatus, a process for manufacturing a resin molded product, a hollow molded product and a container.

### BACKGROUND ART

Resin containers, which are configured that a resin cladding product (outer shell) is overmolded over the outside of a hollow molded product (inner shell) composed of a resin as a container for containing various types of products to be contained, are proposed (for example, Patent Documents 1 and 2). Since the inner shell can be produced with a different material from the outer shell in such container, the container can be designed to comply with properties of a substance to be contained, which requires, for example, a corrosion resistance for the inner shell and also requires a mechanical strength for the outer shell.

Meanwhile, when a resin cladding product is overmolded over the outside of a hollow molded product, the process is to be conducted so as to inhibit a wobble of the hollow molded product in the metallic mold.

Further, when the hollow molded product and the resin cladding product have respective directivities in their orientation, the orientation of the hollow molded product for the metallic mold and the resin cladding product must be fixed to conduct the overmolding process. When the hollow molded product has a profile having a directivity in its orientation, such as in a case where the product has, for example, a thicker direction and a thinner direction, or when a decoration is provided in a specific location of the hollow molded product, such requirement is arisen when the resin cladding product is also formed to have a profile having a directivity, or when a decoration is also provided in a specific location of the resin cladding product.

In general, since a neck portion of a hollow molded product has a cylindrical shape due to the requirement for being equipped with a screw cap, it is difficult to fix an orientation of the hollow molded product relative to the metallic mold and the resin cladding product by supporting the neck portion.

On the contrary, in the process for molding resins as described in Patent Documents 1 and 2, a threaded feature is formed in each of the neck portion of the hollow molded product and the metallic mold, and the both are mutually screwed to install the hollow molded product to the metallic mold to allow using thereof in the overmolding process.

### RELATED DOCUMENTS

### PATENT DOCUMENTS

[Patent document 1]
   International Publication No.WO2008/010597 pamphlet
[Patent document 2]
   International Publication No.WO2008/010600 pamphlet

### DISCLOSURE OF THE INVENTION

However, in the processes for molding resins as described in Patent Documents 1 and 2, in an installation of the hollow molded product to the metallic mold or in a removal of the hollow molded product from the metallic mold, the hollow molded product or the molded container must be rotated to screw the neck portion to the metallic mold or to eliminate the neck portion from the metallic mold. Thus, it requires a process for rotating the hollow molded product or the molded container. Further, since the position of the threaded shape formed in the neck portion of the hollow molded product and the torque of the screw are varied, sufficient care is necessary for obtaining sufficient accuracy of the angle of the hollow molded product relative to the metallic mold (and the resin cladding product) and the reproducibility thereof in the overmolding process.

The present invention is made based on the above-described problems, and the object thereof is to provide a resin molding apparatus, a process for manufacturing a resin molded product, a hollow molded product and a container, which allow achieving an easy inhibition of a wobble of the hollow molded product in the overmolding process, and allow obtaining sufficient accuracy of the angle of the hollow molded product relative to the metallic mold and the resin cladding product and the reproducibility thereof in the overmolding process.

The present invention provides a resin molding apparatus, comprising: a support unit, being capable of rotatably supporting a hollow molded product around an axis of a neck portion, the hollow molded product including a main body and the neck portion, the main body having a form of a container, and the neck portion having a cylindrical form and being in communication with the main body;
a set of metallic mold constituted of metallic mold members for leastwise enclosing the main body of the hollow molded product supported by the support unit by mating one of metallic mold members with the others; and
a resin charging unit for charging a resin into a cavity formed between the set of metallic mold member and the hollow molded product so as to form a resin cladding product over the outer surface of the hollow molded product via an overmolding process,
wherein the hollow molded product further includes a pinched portion, which is formed around the neck portion and is pinched by a plurality of metallic mold members of the set of metallic mold members,
wherein an outer profile of the pinched portion around an axis of the neck portion is defined to have a cross section of a non-circular profile that is perpendicular to the direction of an axis of the neck portion,
wherein each of the plurality of metallic mold members has a neck portion pinching part for pinching the pinched portion,
wherein an integrated inner profile of the neck portion pinching parts of the plurality of metallic mold members in the condition that the neck portion pinching parts are mated together is defined so as to be along the outer profile of the pinched portion, and
wherein, when a rotation angle of the hollow molded product supported by the support unit is misaligned around the axis, the neck portion pinching part pushes the pinched portion when the neck portion pinching part pinches the pinched portion to cause a rotation of the hollow molded product, while the mold members of the set of metallic mold disposed around the pinched portion are moved toward each other to be eventually mated together, thereby correcting the rotation angle around the axis.

Alternatively, the present invention provides a process for manufacturing a resin molded product, including:
a first step for rotatably supporting a hollow molded product around an axis of a neck portion, the hollow molded product including a main body and the neck portion, the main body having a form of a container, and the neck portion having a cylindrical form and being in communication with the main body;
a second step for moving metallic mold members of a set of a metallic mold toward each other from a periphery of the hollow molded product to be eventually mated together to leastwise enclose the main body of the hollow molded product by mating one of the metallic mold with the others; and
a third step for charging a resin into a cavity formed between the set of metallic mold and the hollow molded product so as to form a resin cladding product over the outer surface of the hollow molded product via an overmolding process,
wherein the hollow molded product further includes a pinched portion, which is formed around the neck portion and is pinched by a plurality of metallic mold members of the set of metallic mold,
wherein an outer profile of the pinched portion around an axis of the neck portion is defined to have a cross section of a non-circular profile that is perpendicular to the direction of an axis of the neck portion,
wherein each of the plurality of metallic mold members has a neck portion pinching part for pinching the pinched portion,
wherein an integrated inner profile of the neck portion pinching parts of the plurality of metallic mold members in the condition that the neck portion pinching parts are mated together is defined so as to be along the outer profile of the pinched portion, and
wherein, in the second step, the neck portion pinching part pushes the pinched portion when the neck portion pinching part pinches the pinched portion to cause a rotation of the hollow molded product, while the mold members of the set of metallic mold are moved toward each other to be mated together in the moving metallic mold members to be eventually mated together, thereby correcting the rotation angle around the axis.

Alternatively, the present invention provides a hollow molded product, including: a main body having a form of a container;
a neck portion having a cylindrical form and being in communication with the main body; and
a pinched portion formed around the neck portion and being pinched by a neck portion pinching part included in the respective metallic mold members,
wherein an outer profile of the pinched portion around an axis of the neck portion is defined to have a cross section of a non-circular profile that is perpendicular to a direction of an axis of the neck portion, and is also formed so that the pinched portion is pushed by the neck portion pinching part to cause a rotation of the hollow molded product, when the metallic mold members respectively disposed in the periphery of the pinched portion are moved toward each other to be eventually mated together and the neck portion pinching part pinches the pinched portion, so that a rotation angle of the hollow molded product for the plurality of metallic mold members is corrected around the axis.

Alternatively, the present invention provides a container including: a hollow molded product including a main body having a form of a container and a neck portion having a cylindrical form and being in communication with the main body, and a cap installing portion, which is formed in the neck portion and on which a cap is installed; and
a resin cladding product leastwise provided integrally with the main body in the outside of the main body,
wherein an outer profile of the neck portion around an axis of at least a section of the neck portion except the cap installing portion is defined to have a cross section of a non-circular profile that is perpendicular to the direction of an axis of the neck portion, and the section is exposed from the resin cladding product, and
wherein any one of first condition and second condition is satisfied and any one of third condition and fourth condition is satisfied,
wherein the first condition includes that the outer profile of the main body is defined to have a cross section of a non-circular profile that is perpendicular to the direction of an axis of the neck portion,
wherein the second condition includes that a decoration is provided in a specific location of the main body around the axis of the neck portion and the decoration is visible from the outside of the container through the resin cladding product,
wherein the third condition includes that the outer profile of the resin cladding product is defined to have a cross section of a non-circular profile that is perpendicular to the direction of the axis of the neck portion, and
wherein the fourth condition includes that a decoration, which is visible from the outside of the container, is provided in a specific location of the resin cladding product around the axis of the neck portion.

According to the present invention, when the metallic mold members of a set of a metallic mold are moved toward each other from a periphery of the hollow molded product in the condition for rotatably supporting the hollow molded product around the axis of the neck portion, a correction of the rotation angle of the hollow molded product against a set of the metallic mold around the axis of the neck portion can be achieved by simply pinching the pinched portion of the neck portion of the hollow molded product with the neck portion pinching parts of a plurality of metallic mold members thereof. Thus, a wobble of the hollow molded product in the overmolding process can be easily inhibited, and sufficient accuracy of the angle of the hollow molded product over the metallic mold and the resin cladding product and the reproducibility thereof in the overmolding process can be obtained easily and sufficiently.

### BRIEF DESCRIPTION OF THE DRAWINGS

The above and the other objects, features and advantages are further apparent on the basis of the preferable embodiments as described below, and the accompanying drawings as described below.

[Fig. 1]

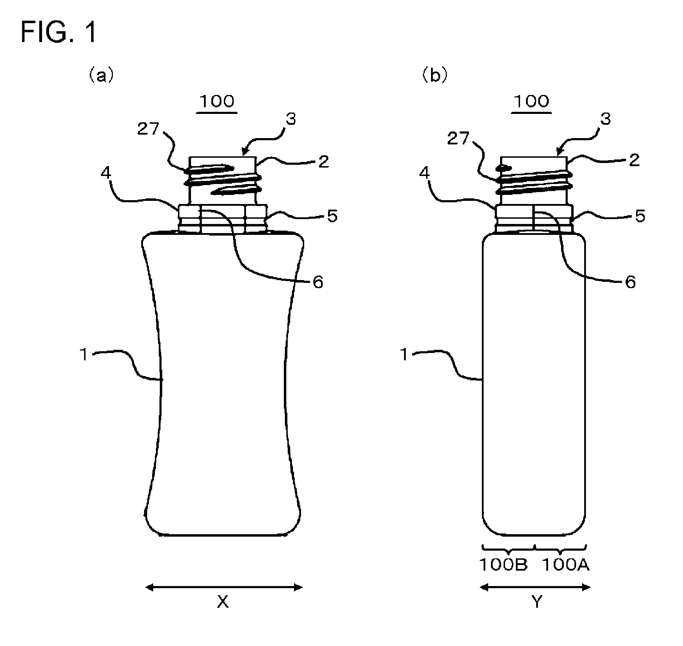

   Fig. 1 contains drawings, showing a hollow molded product according to an embodiment, and (a) shows a front view, and (b) shows a side view.
[Fig. 2]

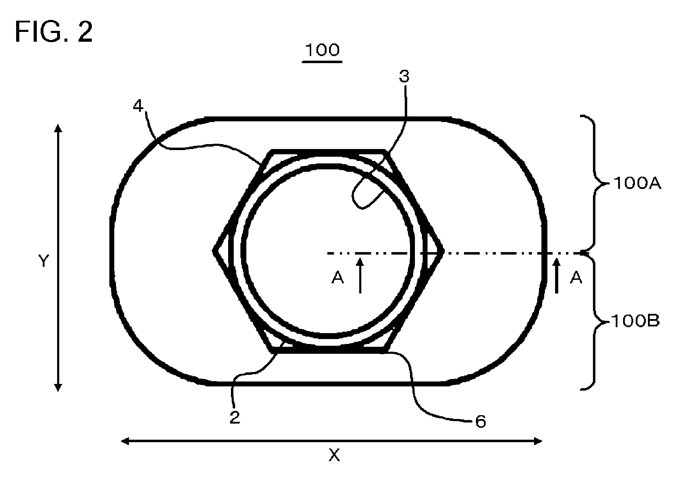

   Fig. 2 is a plan view of a hollow molded product according to an embodiment.
[Fig. 3]

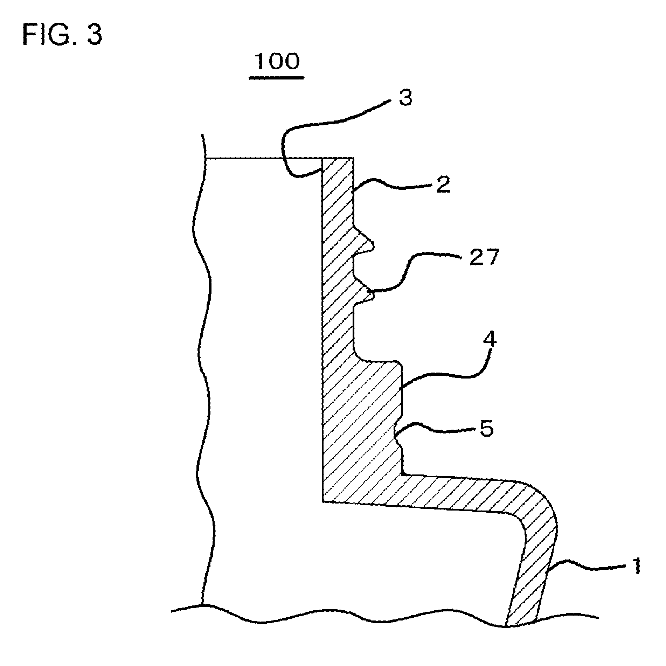

   Fig. 3 is a cross-sectional view of Fig. 2 along an arrow A-A.
[Fig. 4]

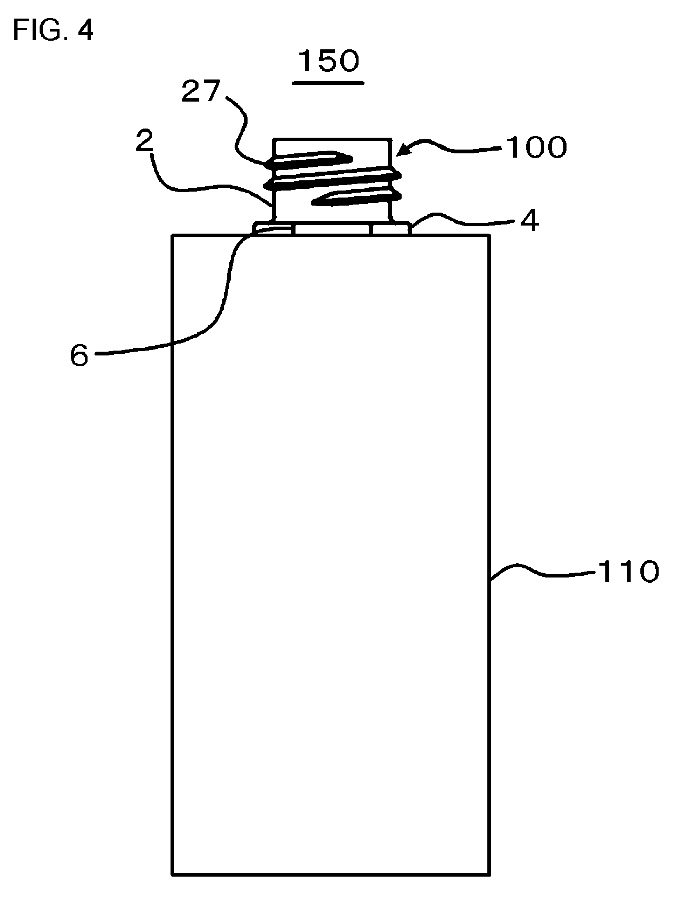

   Fig. 4 is a front view, showing a resin molded product produced via an overmolding process.
[Fig. 5]

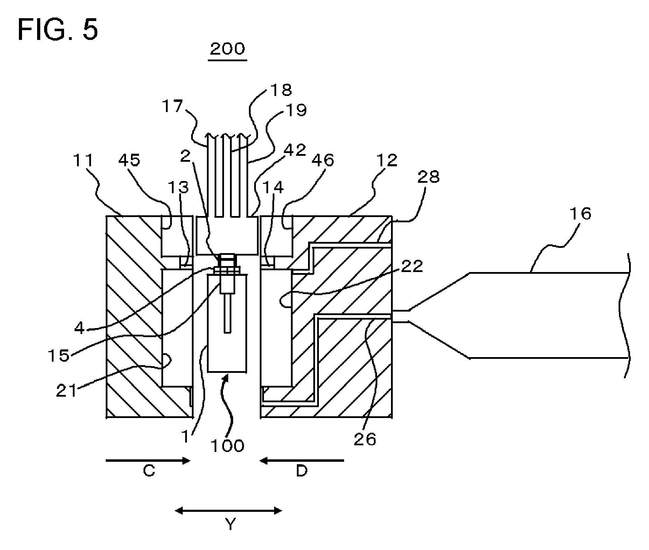

   Fig. 5 is a side cross-sectional view, showing a resin molding apparatus according to an embodiment, and in particular showing a condition thereof before metallic mold members are mated together.
[Fig. 6]

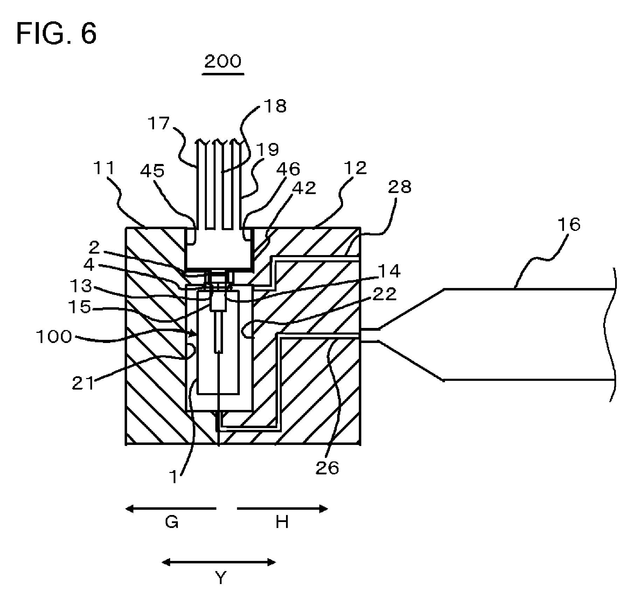

   Fig. 6 is a side cross-sectional view, showing the resin molding apparatus according to the embodiment, and in particular showing a condition thereof, in which the metallic mold members are mated together.
[Fig. 7]

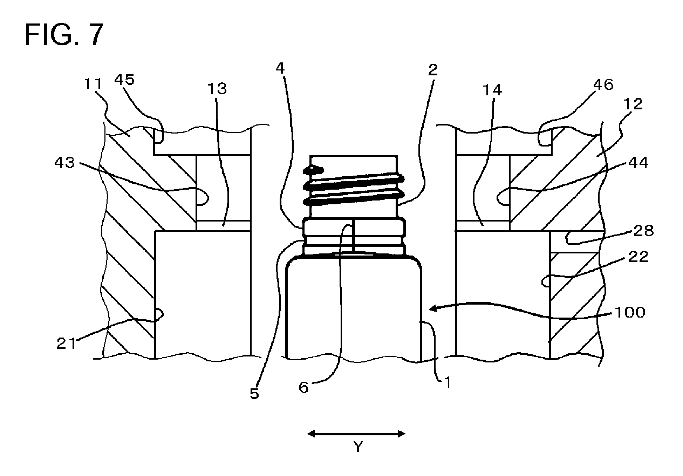

   Fig. 7 is an enlarged view, showing a positional relation between the hollow molded product and the metallic mold in the condition shown in Fig. 5.
[Fig. 8]

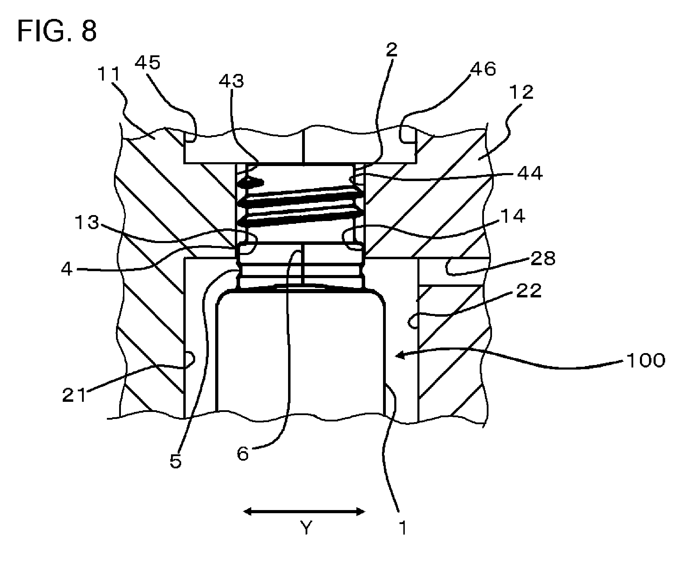

   Fig. 8 is an enlarged view, showing a positional relation between the hollow molded product and the metallic mold in the condition shown in Fig. 6.
[Fig. 9]

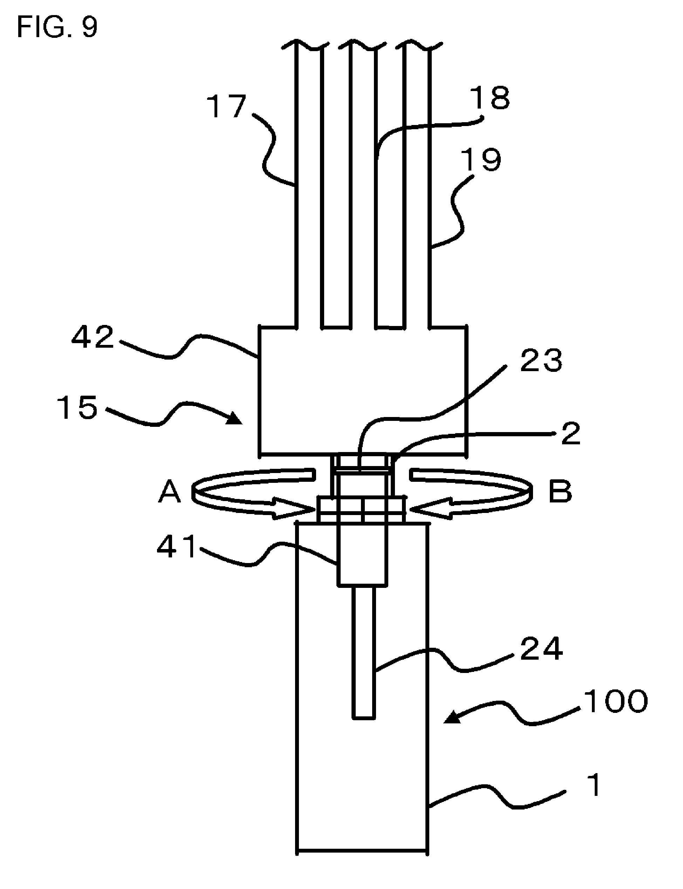

   Fig. 9 is a side view, showing a condition, in which the hollow molded product is supported by the support unit of the resin molding apparatus.
[Fig. 10]

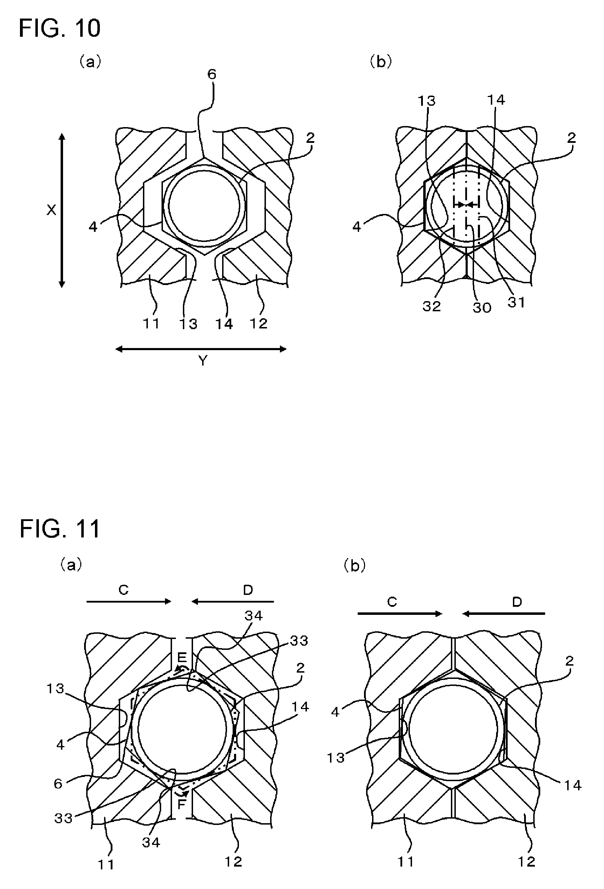

   Fig. 10 is a plane cross-sectional view of neck portion pinching parts of metallic mold members of a resin molding apparatus, and (a) illustrates a condition before the metallic mold members are mated together, and (b) illustrates a condition, in which the metallic mold members are mated together, respectively.
[Fig. 11]
   Fig. 11 is a plane cross-sectional view of the neck portion pinching part, illustrating a correcting movement for the rotation angle of the hollow molded product over the metallic mold, and (a) illustrates an action at an initial stage, and (b) illustrates an action at a later stage, respectively.
[Fig. 12]

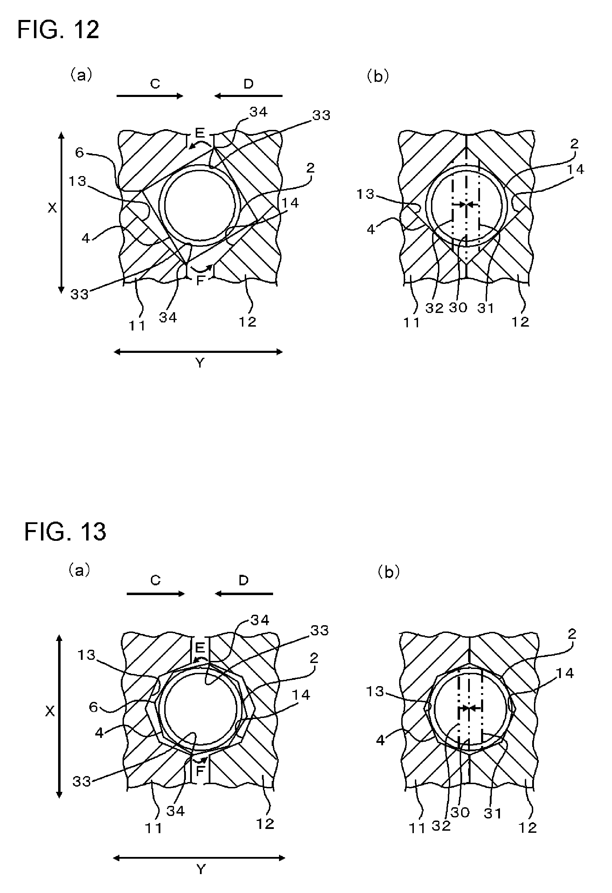

   Fig. 12 is a plane cross-sectional view, illustrating modified embodiment 1 of neck portion pinching parts and a pinched portion, and (a) illustrates a condition, in which metallic mold members are moved toward each other, and (b) illustrates a condition, in which the metallic mold members are mated together, respectively.
[Fig. 13]
   Fig. 13 is a plane cross-sectional view, illustrating modified embodiment 2 of a neck portion pinching part and a pinched portion, and (a) illustrates a condition, in which metallic mold members are moved toward each other, and (b) illustrates a condition, in which the metallic mold members are mated together, respectively.
[Fig. 14]

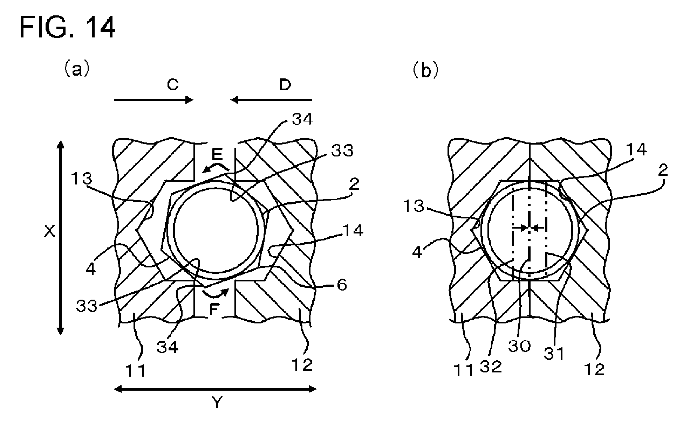

   Fig. 14 is a plane cross-sectional view, illustrating modified embodiment 3 of a neck portion pinching part and a pinched portion, and (a) illustrates a condition, in which metallic mold members are moved toward each other, and (b) illustrates a condition, in which the metallic mold members are mated together, respectively.
[Fig. 15]

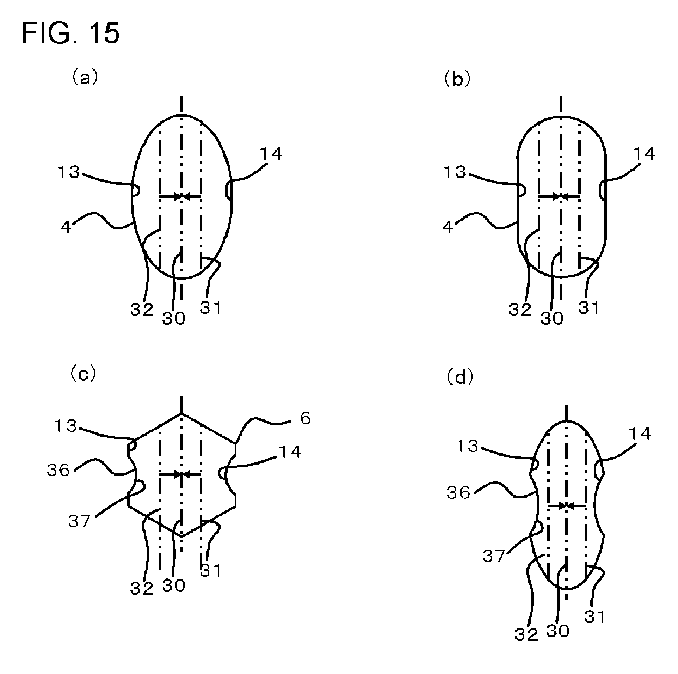

   Fig. 15 is a plane cross-sectional view, illustrating other modified embodiments of a neck portion pinching part and a pinched portion.
[Fig. 16]

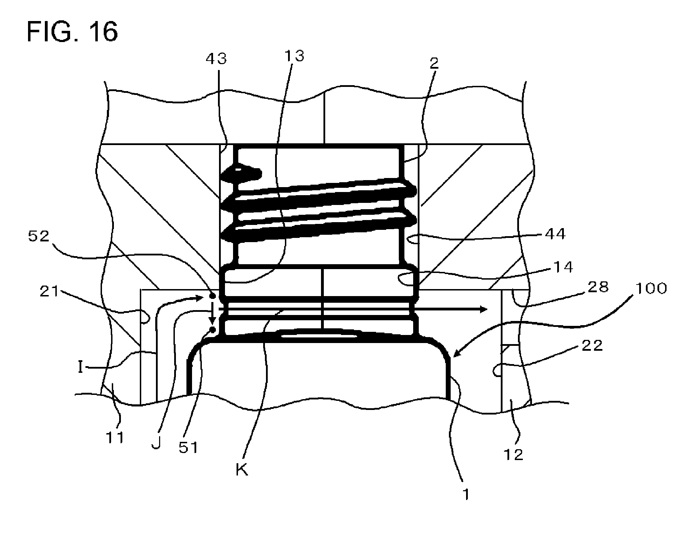

   Fig. 16 is a schematic drawing, illustrating an example of a flow of a resin in an overmolding process.

### DESCRIPTION OF EMBODIMENTS

Preferable embodiments of the present invention will be described below in reference to the drawings. In all figures, the same reference numeral is assigned to the similar constituent element, and the description thereof is not presented.

Fig. 1 to Fig. 3 are drawings that show a hollow molded product 100 according to the embodiment, in which Fig. l(a) shows a front view, Fig. 1(b) shows a side view, Fig. 2 shows a plan view, and Fig. 3 shows a cross-sectional view of Fig. 2 along an arrow A-A. Fig. 4 is a front view that shows a container 150 produced via an overmolding process. Fig. 5 and Fig. 6 are side cross-sectional views that show a resin molding apparatus 200 according to the embodiment, in which Fig. 5 illustrates a condition before the metallic mold members 11 and 12 are mated together, and Fig. 6 illustrates a condition that the metallic mold members 11 and 12 are mated together. Fig. 7 is an enlarged view that shows a positional relation of the hollow molded product 100 and the metallic mold members 11 and 12 in the condition shown in Fig. 5, and Fig. 8 is an enlarged view that shows a positional relation of the hollow molded product 100 and the metallic mold members 11 and 12 in the condition shown in Fig. 6. Fig. 9 is a side view that shows a condition, in which the hollow molded product 100 is supported by a support unit 15 of the resin molding apparatus 200. Fig. 10 is a plane cross-sectional view of neck portion pinching parts 13 and 14 of the metallic mold members 11 and 12 of the resin molding apparatus 200, and (a) illustrates a condition before the metallic mold members 11 and 12 are mated together, and (b) illustrates a condition, in which the metallic mold members 11 and 12 are mated together, respectively. Fig. 11 is a plane cross-sectional view of the neck portion pinching parts 13 and 14, illustrating a correcting movement for the rotation angle of the hollow molded product 100 over the metallic mold members 11 and 12, and (a) illustrates an action at an initial stage, and (b) illustrates an action at a later stage, respectively.

The resin molding apparatus 200 according to the present embodiment includes a support unit 15, which is capable of rotatably supporting, around an axis of the neck portion 2, the hollow molded product 100 having a main body 1 of a form of a container and a cylindrical neck portion 2 that is in communication with the inside of the main body 1. The resin molding apparatus 200 further includes a set of metallic mold members (for example, a pair of metallic mold members 11 and 12), which leastwise encloses the main body 1 of the hollow molded product 1 supported with the support unit 15 by mating one of the metallic mold members with the others. The resin molding apparatus 200 further includes a resin charging unit 16 for charging a resin into a cavity formed between the set of metallic mold members and the hollow molded product 100 so as to form a resin cladding product 110 over the outer surface of the hollow molded product 100 via an overmolding process. The hollow molded product 100 further includes a pinched portion 4, which is formed around the neck portion 2 and is pinched by a plurality of metallic mold members of the set of metallic mold members (for example, a pair of metallic mold members 11 and 12). An outer profile of the pinched portion 4 around an axis of the neck portion 2 is defined to have a cross section of a non-circular profile that is perpendicular to the direction of an axis of the neck portion 2. Each of the plurality of metallic mold members has neck portion pinching parts 13 and 14 for pinching the pinched portion 4, and an integrated inner profile of the neck portion pinching parts 13 and 14 of the plurality of metallic mold members in the condition that the neck portion pinching parts 13 and 14 are mated together is defined so as to be along the outer profile of the pinched portion 4. When a rotation angle of the hollow molded product 100 supported by the support unit 15 around the axis is misaligned from a predetermined angle, the neck portion pinching parts 13 and 14 push the pinched portion 4 when the neck portion pinching parts 13 and 14 pinch the pinched portion 4 to cause a rotation of the hollow molded product 100, while the mold members of the set of metallic mold disposed around the pinched portion 4 are moved toward each other to be eventually mated together, thereby correcting the rotation angle around the axis.
In addition, the process for manufacturing the resin molded product according to the present embodiment includes a first step for rotatably supporting a hollow molded product 100 around an axis of a neck portion 2, the hollow molded product 100 including the main body 1 having a form of a container and the neck portion 2 having a cylindrical form and being in communication with the main body 1. Further, such manufacturing process includes a second step for moving the metallic mold members (for example, a pair of metallic mold members 11 and 12) toward each other from a periphery of the hollow molded product 100 to be eventually mated to leastwise enclose the main body 1 of the hollow molded product 100 by mating one of the metallic mold with the others. Furthermore, such manufacturing process includes a third step for charging a resin into a cavity formed between the set of mated metallic mold members and the hollow molded product 100 so as to form a resin cladding product 110 over the outer surface of the hollow molded product 100 via an overmolding process. The first to the third processes are carried out in such sequence. The hollow molded product 100 further includes a pinched portion 4, which is formed around the neck portion 2 and is pinched by a plurality of metallic mold members of the set of metallic mold (for example, a pair of metallic mold members 11 and 12). An outer profile of the pinched portion 4 around an axis of the neck portion 2 is defined to have a cross section of a non-circular profile, which is perpendicular to a direction of an axis of the neck portion 2. The plurality of metallic mold members have neck portion pinching parts 13 and 14, respectively, for pinching the pinched portion 4, and an integrated inner profile of the neck portion pinching parts of the plurality of metallic mold members in the condition that the neck portion pinching parts 13 and 14 are mated together is defined so as to conform with the outer profile of the pinched portion. In the second step, when a set of metallic mold members are moved toward each other to be mated together and the neck portion pinching parts 13 and 14 pinch the pinched portion 4, the neck portion pinching parts 13 and 14 push the pinched portion 4 to cause a rotation of the hollow molded product 100, thereby correcting the rotation angle around the axis.
Besides, the hollow molded product 100 according to the present embodiment includes the main body 1 having a form of a container; the neck portion 2 having a cylindrical form and being in communication with the main body 1; and the pinched portion 4, which is formed around the neck portion 2 and is capable of being pinched by the neck portion pinching parts 13 and 14 included in the respective metallic mold members (for example, a pair of metallic mold members 11 and 12). An outer profile of the pinched portion 4 around an axis of the neck portion 2 is defined to have a cross section of a non-circular profile that is perpendicular to the direction of an axis of the neck portion 2. The outer profile of the pinched portion 4 around an axis of the neck portion 2 is also formed so that the pinched portion 4 is pushed by the neck portion pinching parts 13 and 14 to rotate the hollow molded product 100, when the metallic mold members respectively disposed in the periphery of the pinched portion are moved toward each other to be eventually mated together and the neck portion pinching parts 13 and 14 pinch the pinched portion 4, so that a rotation angle of the hollow molded product 100 for the plurality of metallic mold members is corrected around the axis.
In addition, a container 150 according to the present embodiment includes the hollow molded product 100 including the main body 1 having a form of a container and the neck portion 2 having a cylindrical form and being in communication with the main body 1, and a cap installing portion (for example, protruding thread portion 27), which is formed in the neck portion 2 and on which a cap (for example, a screw cap (not shown)) is installed; and a resin cladding product 100 leastwise provided in the outside of the main body 1 integrally with the main body 1. An outer profile of the neck portion 2 around an axis of at least a portion (pinched portion 4) of the neck portion 2 except the cap installing portion is defined to have a cross section of a non-circular profile that is perpendicular to the direction of an axis of the neck portion 2. Such portion is exposed from the resin cladding product 110. The container 150 satisfies any one of the following first condition and second condition and any one of third condition and fourth condition. The first condition is a condition, in which the outer profile of the main body 1 is defined to have a cross section of a non-circular profile that is perpendicular to the direction of an axis of the neck portion 2. The second condition is a condition, in which a decoration is provided in a specific location of the main body 1 around the axis of the neck portion 2 and the decoration is visible from the outside of such container 150 through the resin cladding product 110. The third condition is a condition, in which the outer profile of the resin cladding product 110 is defined to have a cross section of non-circular profile that is perpendicular to the direction of the axis of the neck portion 2. The fourth condition is a condition, in which a decoration, which is visible from the outside of such container 150, is provided in a specific location of the resin cladding product 110 around the axis of the neck portion 2.

### Detailed descriptions will be made below.

First of all, the constitution of the hollow molded product 100 according to the present embodiment will be described in reference to Fig. 1 to Fig. 3.

As shown in Fig. 1 to Fig. 3, the hollow molded product 100 according to the present embodiment includes the main body 1 having a form of a container, and the cylindrical neck portion 2 that is in communication with the inside of the main body 1. An opening 3 in the top edge of the neck portion 2 is in communication with a space outside of the hollow molded product 100.

The outer circumference surface of the neck portion 2 is provided with, for example, a protruding thread portion 27 having a screw-like profile formed thereon. Such protruding thread portion 27 is configured to be screwed on a screw groove formed on the inner circumference surface of the screw cap, which is not shown here, to tightly close the opening 3 of the neck portion 2 with such screw cap.

The hollow molded product 100 is employed as an inner shell for the container 150 (Fig. 4), which is produced via an overmolding process. Various types of products to be contained can be contained in such hollow molded product 100. The available products to be contained is not particularly limited to any specific product, and any of liquid, gas and solid products are available, and specific examples may be a face lotion, a medicine, a beverage and the like. While a material for the hollow molded product 100 may preferably be a resin, other type of material (for example, metal, glass) may be appropriately selected according to the application.

Further, a location on the outer circumference surface of the neck portion 2 that causes no interference with the protruding thread portion 27, or more specifically, at least a portion thereof except the cap installing portion, is provided with a pinched portion 4 formed therein. Such pinched portion 4 is a portion, which is pinched with the neck portion pinching parts 13 and 14 (Fig. 7) that a set of metallic mold members as discussed later (in case of the present embodiment, for example, a pair of metallic mold members 11 and 12 (Fig. 5 to Fig. 8)) respectively have.

An outer profile of the pinched portion 4 around the axis of the neck portion 2 is defined to have a cross section of a non-circular profile that is perpendicular to the direction of the axis of the neck portion 2 (the entire profile of the outer circumference of the pinched portion 4 is a profile except a cylindrical shape). Moreover, the outer profile of the pinched portion 4 is defined so that, when a rotation angle of the hollow molded product 100 around the axis of the neck portion 2 is misaligned against the metallic mold members 11 and 12, the pinched portion 4 is pushed by the neck portion pinching parts 13 and 14 to cause a rotation of the hollow molded product 100 when the metallic mold members 11 and 12 respectively disposed in the periphery of the pinched portion 4 are moved toward each other to be eventually mated together and the neck portion pinching parts 13 and 14 pinch the pinched portion 4, such that the rotation angle of the hollow molded product 100 against the plurality of metallic mold members 11 and 12 is corrected around the axis of the neck portion 2. The detail of the outer profile of the pinched portion 4 will be described later.

In addition, a section of the pinched portion 4 pushed by the neck portion pinching parts 13 and 14 during the rotation is beveled or chamfered. More specifically, the ridge line 6 of the pinched portion 4 extending along the axial direction of the neck portion 2 is chamfered. In the present embodiment, the outer profile of the pinched portion 4 has a cross section of, for example, regular hexagon (substantially regular hexagon), as discuss later in detail. In such case, six ridge lines 6 in the outer circumference of pinched portion 4 are chamfered, respectively.

As shown in Fig. 1 and Fig. 3, the pinched portion 4 is formed in, for example, a base end portion of the neck portion 2, or more specifically, an end portion of the neck portion 2 in the side of the main body 1. This allows preventing an interference of the pinched portion 4 with the protruding thread portion 27 and also preventing an obstruction for installing the screw cap. In addition, an annular groove 5 extending around the axis of the neck portion 2 is formed on the outer circumference surface of the pinched portion 4.

As shown in Fig. 4, a resin cladding product 110 serving as an outer shell can be formed over the outside of such hollow molded product 100 via an overmolding process to manufacture the container 150.

In addition to above, there is a need for reducing the thickness of the container 150 in view of the design of the container 150, and the main body 1 involves a thicker direction (the direction of its outer diameter corresponds to the larger diameter) and a thinner direction (the direction of its outer diameter corresponds to the smaller diameter) among the directions along the plane perpendicular to the axial direction of the neck portion 2 in the present embodiment. Specifically, in Fig. 1 and Fig. 2, X-direction is the thicker direction, and Y-direction is the thinner direction. Similarly, the resin cladding product 110 also involves a thicker direction and a thinner direction. Since the main body 1 and the resin cladding product 110 involve the thicker direction and the thinner direction as described above in the present embodiment, the orientation of the hollow molded product 100 over the resin cladding product 110 around the axis of the neck portion 2 (rotation angle) is fixed at a predetermined orientation (angle). More specifically, the thicker direction of the resin cladding product 110 is coincident with the thicker direction of the main body 1, and the thinner direction of the resin cladding product 110 is coincident with the thinner direction of the main body 1.

However, regardless of the presence of a thicker direction and a thinner direction in the profile of the main body 1 and the resin cladding product 110, if any one of the following first condition and second condition is satisfied and any one of third condition and fourth condition is satisfied, the rotation angle of the hollow molded product 100 over the resin cladding product 110 around the axis of the neck portion 2 is defined at a predetermined angle. The first condition is a condition, in which the outer profile of the main body 1 is defined to have a cross section of a non-circular profile that is perpendicular to the direction of the axis of the neck portion 2 (for example, a profile of regular quadratic prism, and the like). The second condition is a condition, in which a decoration is provided in a specific location of the main body 1 around the axis of the neck portion 2 and the decoration is visible from the outside of the container 150 through the resin cladding product 110. For example, when the resin cladding product 110 is composed of a transparent resin, a decoration of the main body 1 can be visible from the outside of the container 150 through the resin cladding product 110. The third condition is a condition, in which the outer profile of the resin cladding product 110 is defined to have a cross section of a non-circular profile that is perpendicular to the direction of the axis of the neck portion 2. The fourth condition is a condition, in which a decoration, which is visible from the outside of the container 150, is provided in a specific location of the resin cladding product 110 around the axis of the neck portion 2. When a decoration is provided on the outer surface of the resin cladding product 110, the decoration of the resin cladding product 110 can be visibly seen from the outside of the container 150. Typical decorations on the main body 1 and the resin cladding product 110 include, for example, a coloration, or a formation of a pattern by processing a concave surface or a convex surface, or the like. Therefore, even if, for example, the main body 1 has a cylindrical shape having a bottom and the resin cladding product 110 also has a cylindrical shape (even if any of the profile of the main body 1 and the profile of the resin cladding product 110 have no directivity around the axis of the neck portion 2), the rotation angle of the hollow molded product 100 over the resin cladding product 110 around the axis of the neck portion 2 is fixed to a predetermined angle when decorations are provided in specific locations thereof around the axis of the neck portion 2, respectively. Here, the definition of "a decoration is provided in a specific location around an axis of a neck portion 2" will be described, in which the condition of "a decoration is provided in a specific location around an axis of a neck portion 2" is achieved when a decoration is provided such that a directivity is caused around the axis of the neck portion 2 in the main body 1 or the resin cladding product 110 by such decoration. Thus, for example, providing an annular decoration extending around the axis of the neck portion 2 is not relevant to the condition of "a decoration is provided in a specific location around an axis of a neck portion 2". In addition, for example, regularly arranging decorations of a predetermined pattern around the axis of the neck portion 2 is not relevant to the condition of "a decoration is provided in a specific location around an axis of a neck portion 2".

At least a part of (in case of the present embodiment, for example, a part of) the pinched portion 4 of the hollow molded product 100 is exposed from the resin cladding product 110.

Here, the resin cladding product 110 serves as covering the hollow molded product 100 so as to closely contact with the outer surface of the hollow molded product 100, and functions as, for example, providing improved outer appearance or enhanced mechanical strength of the container 150.

The resin cladding product 110 is made of, for example, a synthetic resin having higher transparency. Examples of available materials for the resin cladding product 110 in such case may include, for example, ionomer resins, acrylic resins, polyester resins or styrene-containing resins such as styrene acrylonitrile copolymer resin and the like. Among these materials, ionomer resins and polyester resins may be preferably employed in view of improved impact resistance, transparency, design-ability and the like. Since the resin cladding product 110 is employed as a cladding product, ionomer resins may be more preferably employed, in view of improved scratching resistance.

Typically available ionomer resin includes, for example, a compound prepared by neutralizing, with a metallic ion, at least a portion of carboxylic group in ethylene-unsaturated carboxylic acid copolymer containing unsaturated carboxylic acid at a rate of 1 to 40 % by mass. The ethylene-unsaturated carboxylic acid copolymer serving as a base polymer of the ionomer resin is obtained by copolymerizing ethylene and unsaturated carboxylic acid, and in addition, optionally other polar monomer. Typical metallic ions includes monovalent, divalent and trivalent metallic ions, and in particular, monovalent, divalent and trivalent metallic ions in group IA, group IIA, group IIIA, group IVA and group III in the Periodic Table.

On the other hand, when the hollow molded product 100 is composed of a resin, available materials include resin materials such as polyolefins, polyesters or polyamides or the like, and in view of visibility for a substance therein, transparent synthetic resins are preferably employed. More specifically, the resins may be selected in view of heat resistance, impact resistance, corrosion resistance, decoration-ability or the like. For example, preferably employed resins include: polyesters or polyamides in view of higher melting temperature; and polyethylene or polypropylene or the above-described ionomer resins in view of higher corrosion resistance. A light-reflective powder may be added in the resin material to obtain improved decoration-ability of the container 150. In addition, the hollow molded product 100 may have a multiple-layered structure, which is configured of a combination of a plurality of resin layers composed of such resin materials.

The hollow molded product 100 may be manufactured by, for example, a blow molding process. In addition, a pair of molded products produced via an injection molding process, which are designed by dividing a finished product into two pieces, may be welded together via vibration. In addition to above, the hollow molded product 100 may be produced by other molding process in place of blow molding process or vibration welding process. In addition, a decoration may be provided on the surface of the hollow molded product 100. In addition to above, the screw cap (not shown) may be formed of the same material as that used for the hollow molded product 100, or may be formed of the different material from that used for the hollow molded product 100.

The manufacture of the container 150 having such hollow molded product 100 and the resin cladding product 110 may be conducted by, for example, employing a resin molding apparatus 200 as described below to conduct a process for manufacturing the resin molded product according to the present embodiment as discussed later.

In the next, an overview of the resin molding apparatus 200 according to the present embodiment will be described, in reference to Fig. 5 to Fig. 9.

The resin molding apparatus 200 according to the present embodiment is an apparatus for overmolding the resin cladding product 110 over the outside of the hollow molded product 100. In addition to above, in the case of the present embodiment, the hollow molded product 100 is assumed to be made of a resin, and the resin molding apparatus 200 is assumed to be an apparatus for overmolding the hollow molded product 100 made of the resin.

As shown in Fig. 5 and Fig. 6, the resin molding apparatus 200 according to the present embodiment includes a support unit 15 for supporting the hollow molded product 100, a pair of metallic mold members 11 and 12, a resin charging unit 16, an internal pressure gas supplying unit 17, a coolant supplying unit 18, and a discharging unit 19.

As shown in Fig. 9, the support unit 15 has an insertion portion 41, which is formed to have a rod shape having an outer diameter that is substantially equivalent to the internal diameter of the neck portion 2 of the hollow molded product 100, and a neck-struck metal fitting 42, to which the top edge of the neck portion 2 is struck. The insertion portion 41 is inserted into the hollow molded product 100 from the neck portion 2 until the top edge of the neck portion 2 strikes the neck-struck metal fitting 42 to achieve a condition, in which the support unit 15 supports the hollow molded product 100.

More specifically, for example, an o-ring 23 is fitted to an outer circumference of the insertion portion 41, and once the insertion portion 41 is inserted into the neck portion 2, the o-ring 23 closely contacts with an inner circumference surface of the neck portion 2 to allow maintaining an air tightness within the main body 1 in the overmolding process.

In this regard, the o-ring 23 closely contacts with the neck portion 2 by a contact force, on which the hollow molded product 100 is capable of rotating around the axis of the neck portion 2 (directions indicated by arrow A and arrow B shown in Fig. 9) relatively over the insertion portion 41, in the condition that the hollow molded product 100 is supported by the support unit 15.

The top edge portion of the insertion portion 41 forms a nozzle 24. The internal pressure gas supplying unit 17 is configured to supply an internal pressure gas from the nozzle 24 to the inside of the main body 1 of the hollow molded product 100 through the interior of the neck-struck metal fitting 42 and the insertion portion 41. Similarly, the coolant supplying unit 18 is configured of to supply a coolant (for example, cooling water) from the nozzle 24 to the inside of the main body 1 of the hollow molded product 100 through the interior of the neck-struck metal fitting 42 and the insertion portion 41. In addition, the discharging unit 19 is configured of to discharge the coolant and the internal pressure gas within the inside of the hollow molded product 100 via the nozzle 24 through the interior of the insertion portion 41 and the neck-struck metal fitting 42. In addition to above, a path for supplying the internal pressure gas, a path for supplying the coolant, and a path for discharging the coolant and the internal pressure gas are independently provided. The internal pressure gas is configured to provide an internal pressure for resisting a resin pressure, which exerts over the hollow molded product 100 from the outside of the hollow molded product 100 in the overmolding process. In addition, the coolant is supplied for inhibiting a deformation of the hollow molded product 100, which is caused by a heat transferred to the hollow molded product 100 from the resin used in the overmolding process during the overmolding process. In addition, the discharge of the coolant and the internal pressure gas from the hollow molded product 100 is conducted for suitably maintaining the internal pressure of the hollow molded product 100.

As shown in Fig. 5 and Fig. 6, cavities 21 and 22 are formed in a pair of metallic mold members 11 and 12, respectively. These metallic mold members 11 and 12 are configured to be movable toward directions for approaching toward each other (directions indicated in arrow C and arrow D shown in Fig. 5) and directions for separating from each other (directions indicated in arrow G and arrow H shown in Fig. 6) by means of a moving mechanism, which is not shown here. As in Fig. 5, the metallic mold members 11 and 12 are moved toward the direction of arrow C and the direction of arrow D, respectively, from the condition that the metallic mold members 11 and 12 are disposed on both sides of the hollow molded product 100, so that the metallic mold members 11 and 12 are mutually combined to enclose the main body 1 of the hollow molded product 100 supported by the support unit 15 with the cavities 21 and 22 as in Fig. 6. In addition to the above, in the present embodiment, a pair of metallic mold members 11 and 12 additionally enclose, for example, a part of the neck portion 2, in addition to the main body 1 (see Fig. 8).

More specifically, for example, the cavity 21 is configured to contain one half section 100B of half sections 100A and 100B of the hollow molded product 100 in view of the thinner direction (see Fig. 1B, Fig. 2), and the cavity 22 is configured to contain the other half section 100A.

A flow path of the resin (hereinafter referred to as resin supply path 26) is formed in the metallic mold member 12. Such resin supply path 26 is designed to be a path for providing communication between the inside of the cavities 21 and 22 and the outside of the metallic mold member 12. More specifically, the route of such resin supply path 26 is designed to, for example, inject the resin from a section corresponding to the bottom of the container 150 into the inside of the cavities 21 and 22.

The resin charging unit 16 charges the resin that composes the resin cladding product 110 into a clearance between the inner circumference surface of the cavities 21 and 22 and the outer circumference surface of the hollow molded product 100 (between the metallic mold members 11 and 12 and the hollow molded product 100) through the resin supply path 26 (see Fig. 6).

In addition, a gas exhaust passage 28 for exhausting the gas pushed by the charged resin may be formed in the metallic mold member 12. In such case, the gas in the cavities 21 and 22 can be exhausted to the outside of the cavities 21 and 22 through the gas exhaust passage 28 by utilizing the resin pressure of the resin charged in the cavities 21 and 22 or by additionally utilizing a suction force caused by a suction means, which is not shown here, in addition to the resin pressure. As described above, the gas in the cavities 21 and 22 is exhausted through the gas exhaust passage 28 to provide reduced rate of remained gas (void) in the cavities 21 and 22 and enhanced filling rate with the resin.

A pair of metallic mold members 11 and 12 includes the neck portion pinching parts 13 and 14 for cooperatively pinching the pinched portion 4 of neck portion 2, respectively.
An integrated inner profile of the mated neck portion pinching parts 13 and 14 of a pair of the metallic mold members 11 and 12 is defined so as to be along the outer profile of the pinched portion 4 around the axis of the neck portion 2.

An inner profile of each of the neck portion pinching parts 13 and 14 is configured, so that, when a rotation angle of the hollow molded product 100 supported by the support unit 15 around the axis of the neck portion 2 is misaligned from a predetermined angle, the neck portion pinching part 13 and 14 pushes the pinched portion 4 when the neck portion pinching parts 13 and 14 pinch the pinched portion 4 to cause a rotation of the hollow molded product 100, while a pair of the metallic mold members 11 and 12 disposed around the pinched portion 4 are moved toward each other to be eventually mated together, thereby correcting the rotation angle of the hollow molded product 100 around the axis of the neck portion 2. These neck portion pinching parts 13 and 14 are formed in sections in the metallic mold members 11 and 12 adjacent to the cavities 21 and 22.

Further, neck housing portions 43 and 44 for cooperatively housing sections of the neck portion 2 closer to the top edge as compared with the pinched portion 4 as shown in Fig. 7 and Fig. 8 are formed in sections of the metallic mold members 11 and 12 adjacent to the neck portion pinching parts 13 and 14 and disposed in the side opposite to the cavities 21 and 22. Here, in Fig. 7 and Fig. 8, the support unit 15 is not shown for the purpose of simplifying the illustration.

Further, metal fitting containing portions 45 and 46 for cooperatively containing the neck-struck metal fitting 42 as shown in Fig. 5 and Fig. 6 are formed in sections of the metallic mold members 11 and 12 adjacent to the neck housing portions 43 and 44 and disposed in the side opposite to the neck portion pinching parts 13 and 14.

Next, in reference to Fig. 10 and Fig. 11, the profiles of the neck portion pinching parts 13 and 14 and the pinched portion 4 will be more specifically described. Here, the cross-sectional views of Fig. 10 and Fig. 11 are cross-sectional views along the plane perpendicular to the axial direction of the neck portion 2.

As described above, the outer profile of the pinched portion 4 around the axis of the neck portion 2 is defined to have a cross section of a profile other than the circular profile, which is perpendicular to the direction of the axis of the neck portion 2. Examples of the profiles other than the circular profile include polygon, ellipse, oval, and other various types of shapes.

Here, in the case of the present embodiment, a pair of, or namely two of, the metallic mold members 11 and 12 are mated together to carry out the overmolding process. In such case, the outer profile of the pinched portion 4 around the axis of the neck portion 2 may be preferably defined to be, for example, a tapered profile, in which the diameter of the profile is increased as approaching to a straight line or plane 30 that forms a boundary for separating the neck portion pinching parts 13 and 14 in the condition that the pinched portion 4 is pinched by the neck portion pinching parts 13 and 14, as shown in Fig. 10(b). More specifically, it is preferable to define the profile, in which a diameter 32 of the pinched portion 4 is increased as approaching to a straight line or plane 30. In addition, the integrated inner profile of the mated neck portion pinching parts 13 and 14 of a pair of metallic mold members 11 and 12 may also be preferably defined to be, for example, a tapered profile, in which the diameter of the profile is increased as approaching to the straight line or plane 30 that forms a boundary for separating the neck portion pinching parts 13 and 14 in the condition that the pinched portion 4 is pinched by the neck portion pinching parts 13 and 14, as shown in Fig. 10(b). More specifically, it is preferable to configure that a clearance 31 between the neck portion pinching parts 13 and 14 is enlarged as approaching to the straight line or plane 30. The outer profile of the pinched portion 4 and the inner profile of the neck portion pinching parts 13 and 14 are defined as described above, so that, when a rotation angle of the hollow molded product 100 against the metallic mold members 11 and 12 around the axis of the neck portion 2 is misaligned from a predetermined angle, the neck portion pinching parts 13 and 14 push the pinched portion 4 when the neck portion pinching parts 13 and 14 pinch the pinched portion 4 to cause a rotation of the hollow molded product 100, while the metallic mold members 11 and 12 disposed around the pinched portion 4 are moved toward each other to be eventually mated together, thereby correcting the rotation angle of the hollow molded product 100 against the metallic mold members 11 and 12 around the axis of the neck portion 2, as shown in Fig. 11. The reason is that the inner circumference surfaces of the neck portion pinching parts 13 and 14 compress a corner 34 (ridge line 6) of the pinched portion 4 toward direction of arrow E and direction of arrow F in Fig. 11, or namely toward the direction for correcting the rotation angle of the hollow molded product 100 against the metallic mold members 11 and 12 around the axis of the neck portion 2, without a corner 33 of the neck portion pinching parts 13 and 14 being wedged to the outer circumference surface of the pinched portion 4.

In the present embodiment, the outer profile of the pinched portion 4 is provided to have, more specifically, for example, as shown in Fig. 1 to Fig. 11, a cross section of regular hexagon (more specifically, regular hexagonal column), which is perpendicular to the axial direction of the neck portion 2. In addition, the integrated inner profile of the mated neck portion pinching parts 13 and 14 is provided to have, more specifically, for example, as shown in Fig. 10 and Fig. 11, an inner hollow cross section of regular hexagon (more specifically, regular hexagonal column), which is perpendicular to the axial direction of the neck portion 2. In such case, the inner profile of each of the neck portion pinching parts 13 and 14 may be preferably formed to have a profile, which conforms to successive three surfaces among the outer circumference surfaces of the pinched portion 4 around the axis of the neck portion 2 disposed around the axis of the neck portion 2. This allows satisfying the condition, in which the clearance 31 between the neck portion pinching parts 13 and 14 and the diameter 32 of the pinched portion 4 are increased as approaching to the straight line or plane 30. Thus, when the rotation angle of the hollow molded product 100 is misaligned against the metallic mold members 11 and 12 around the axis of the neck portion 2, the rotation angle of the hollow molded product 100 against the metallic mold members 11 and 12 can be corrected around the axis of the neck portion 2.

In addition to above, since the ridge line 6 of the pinched portion 4 extending along the axial direction of the neck portion 2 is chamfered, a friction between the pinched portion 4 and the neck portion pinching parts 13 and 14 can be reduced to achieve smoother action for such correction.

Modified embodiment 3 of the present embodiment, in which the profiles of the neck portion pinching parts 13 and 14 and the pinched portion 4 are defined as shown in, for example, Fig. 14, will be described. It should be noted that, in this modified embodiment, it may be possibly difficult to carry out the correction of the rotation angle of the hollow molded product 100 against the metallic mold members 11 and 12 around the axis of the neck portion 2, depending on the quantity of the misalignment in the rotation angle of the hollow molded product 100 against the metallic mold members 11 and 12 and the size of the clearance between the metallic mold members 11 and 12 and the pinched portion 4. Shown in Fig. 14 is an example, in which both of the integrated inner profile of the mated neck portion pinching parts 13 and 14 and the outer profile of the pinched portion 4 have cross sections of regular hexagon that is perpendicular to the axial direction of the neck portion 2. In this regard, the straight line or the plane 30 that forms a boundary for separating the neck portion pinching parts 13 and 14 is defined so as to pass a midpoint of each of two sides face to each other in among six sides of the outer circumference of the pinched portion 4. In such case, the integrated inner profile of the mated neck portion pinching parts 13 and 14 does not satisfy the condition, in which the diameter is increased as approaching to the straight line or the plane 30 under the condition that the pinched portion 4 is pinched with the neck portion pinching parts 13 and 14, as shown in Fig. 14(b) (there is a range for causing no change of the clearance 31 even though it approaches to the straight line or the plane 30). Similarly, the outer profile of the pinched portion 4 around the axis of the neck portion 2 does not satisfy the condition, in which the diameter is increased as approaching to the straight line or the plane 30 under the condition that the pinched portion 4 is pinched with the neck portion pinching parts 13 and 14, as shown in Fig. 14(b) (there is a range for causing no change of the diameter 32 even though it approaches to the straight line or the plane 30). In such case, if the rotation angle of the hollow molded product 100 is misaligned around the axis of the neck portion 2 against a pair of metallic mold members 11 and 12 as shown in Fig. 14(a), there may be the case that the corner 33 of the neck portion pinching part 13 may possibly be wedged to the outer circumference surface of the pinched portion 4 when the metallic mold members 11 and 12, each of which is arranged around the periphery of the pinched portion 4, are moved toward each other. Thus, this may cause a rotation of the hollow molded product 100 in the reverse direction opposed to the direction for correcting the rotation angle of the hollow molded product 100 against the metallic mold members 11 and 12 around the axis of the neck portion 2 (direction of arrow E and direction of arrow F in Fig. 14), so that it is difficult to corrects the rotation angle of the hollow molded product 100 around the axis of the neck portion 2. Furthermore, as a result of the unwanted rotation of the hollow molded product 100 in the reverse direction opposite to the direction for correction, the pinched portion 4 cannot be accurately (as shown in Fig. 14(b)) pinched by the neck portion pinching parts 13 and 14, and thus the metallic mold members 11 and 12 may not possibly be accurately mated. Thus, when the profile of the neck portion pinching parts 13 and 14 and the profile of the pinched portion 4 are as shown in Fig. 14, for example, it is necessary to provide the clearance between the metallic mold members 11 and 12 and the pinched portion 4 as larger as possible. The rotation angle of the hollow molded product 100 for the metallic mold members 11 and 12 can be corrected around the axis of the neck portion 2 by, for example, providing the clearance in such way, even in the case of modified embodiment 3 (Fig. 14). When the inner profile of the neck portion pinching parts 13 and 14 and the outer profile of the pinched portion 4 do not satisfy the above-described condition, similar situation is caused, regardless of the condition that the integrated inner profile of the mated neck portion pinching parts 13 and 14 and the outer profile of the pinched portion 4 are regular hexagon, respectively.

Meanwhile, in the case that the integrated inner profile of the mated neck portion pinching parts 13 and 14 and the outer profile of the pinched portion 4 are polygon, respectively, when (2n+1)-sided polygon (n is positive integer number) such as triangle, pentagon and the like is selected, it is not possible to satisfy the condition, in which the clearance 31 between the neck portion pinching parts 13 and 14 and the diameter 32 of the pinched portion 4 are increased as approaching to the straight line or the plane 30.

Thus, in the case that the integrated inner profile of the mated neck portion pinching parts 13 and 14 and the outer profile of the pinched portion 4 are polygon, respectively, for example, it is preferable to select regular 2(n+1)-sided polygon (n is a positive integer number) such as regular square, regular hexagon, regular octagon and the like for the integrated inner profile of the mated neck portion pinching parts 13 and 14 and the outer profile of the pinched portion 4. Here, the inner profile and the outer profile described here are also the profiles of the cross-sections around the axis of the neck portion 2. Then, the inner profile of each of the neck portion pinching parts 13 and 14 is formed to a profile, which conforms with successive (n+1) surfaces among the outer circumference surfaces of the pinched portion 4 around the axis of the neck portion 2 disposed around the axis of the neck portion 2. This can satisfy the condition, in which the clearance 31 between the neck portion pinching parts 13 and 14 and the diameter 32 of the pinched portion 4 are increased as approaching to the straight line or the plane 30.

Meanwhile, as described above, the main body 1 involves the thicker direction (X direction) and the thinner direction (Y direction). In such case, for example, for the purpose of reducing the thickness of the container 150, it is considered to cause a requirement for reducing the overhanged dimension of the pinched portion 4 overhanged from the neck portion 2 in the thinner direction (Y direction) as much as possible. For example, when regular hexagon is selected for the integrated inner profile of the mated neck portion pinching parts 13 and 14 and the outer profile of the pinched portion 4 as described above, the overhanged dimension can be reduced to substantially zero, as shown in Fig. 2 and Fig. 10. This is because, when the configuration is provided to satisfy the condition, in which the clearance 31 between the neck portion pinching parts 13 and 14 and the diameter 32 of the pinched portion 4 are increased as approaching to the straight line or the plane 30, two sides in regular hexagon are parallelly opposed in the thinner direction (Y direction) of the main body 1. However, for example, in a case that regular square, for example, is selected for the integrated inner profile of the mated neck portion pinching parts 13 and 14 and the outer profile of the pinched portion 4 as illustrated in Fig. 12 as modified embodiment 1 of the present embodiment, when the configuration is provided to satisfy the condition, in which the clearance 31 between the neck portion pinching parts 13 and 14 and the diameter 32 of the pinched portion 4 is increased as approaching to the straight line or the plane 30, the overhanged dimension of the pinched portion 4 overhanged from the neck portion 2 in the thinner direction Y and the thicker direction X is increased as compared with the case of regular hexagon. In addition, for example, in the case that regular octagon, for example, is selected for the integrated inner profile of the mated neck portion pinching parts 13 and 14 and the outer profile of the pinched portion 4 as shown in Fig. 13 as modified embodiment 2 of the present embodiment, when the configuration is provided to satisfy the above-described condition, the overhanged dimension of the pinched portion 4 overhanged from the neck portion 2 in the thinner direction Y and the thicker direction X is increased as compared with the case of regular hexagon, while such overhanged dimension is smaller than that in the case of regular square. This is because, in any of the cases of Fig. 12 and Fig. 13, when the configuration is provided to satisfy the condition, in which the clearance 31 between the neck portion pinching parts 13 and 14 and the diameter 32 of the pinched portion 4 are increased as approaching to the straight line or the plane 30, two sides in regular square and regular octagon are not parallelly opposed in the thinner direction (Y direction) of the main body 1. Taking the above-described features into consideration, in order to reduce the overhanged dimension of the pinched portion 4 overhanged from the neck portion 2 in the thinner direction (Y direction) as much as possible and in order to satisfy the condition, in which the clearance 31 between the neck portion pinching parts 13 and 14 and the diameter 32 of the pinched portion 4 are increased as approaching to the straight line or the plane 30, it is preferable to select regular 2m(2n+1)-sided polygon (m and n are positive integer number) such as regular hexagon, regular decagon, regular dodecagon and the like for the integrated inner profile of the mated neck portion pinching parts 13 and 14 and the outer profile of the pinched portion 4. Here, the inner profile and the outer profile as mentioned here are also the profiles of cross sections around the axis of the neck portion 2. Then, the inner profile of each of the neck portion pinching parts 13 and 14 is formed to have a profile, which conforms with successive m(2n+1) surfaces among the outer circumference surfaces of the pinched portion 4 around the axis of the neck portion 2 disposed around the axis of the neck portion 2. This can provide that two sides in the polygon are mutually parallelly opposed in the thinner direction (Y direction) of the main body 1, so that the overhanged dimension of the pinched portion 4 overhanged from the neck portion 2 can be reduced in the thinner direction (can be reduced to substantially zero). In this regard, hexagon having least sides among regular 2m(2n+1) polygons is the most preferable. Because this allows the longest length of the sides for the same external dimension of the pinched portion 4, so that the action for the correction of the rotation angle of the hollow molded product 100 for the metallic mold members 11 and 12 can be most firmly and adequately carried out.

In addition to above, the integrated inner profile of the mated neck portion pinching parts 13 and 14 and the outer profile of the pinched portion 4 are not limited to polygon. Other example except polygon, as other modified embodiment shown in Fig. 15, may be, for example, ellipse (Fig. 15(a)) and oval (Fig. 15(b)). In these cases, for example, the neck portion pinching parts 13 and 14 can be configured to have profiles obtained by dividing thereof into two parts along its long axis as a separating boundary, so that the condition, in which the clearance 31 between the neck portion pinching parts 13 and 14 and the diameter 32 of the pinched portion 4 are increased as approaching to the straight line or the plane 30, can be satisfied. Further, alternative profiles for the integrated inner profile of the mated neck portion pinching parts 13 and 14 and the outer profile of the pinched portion 4 may be, in addition, for example, a polygon having a cutting edge 36 or a projection 37 (Fig. 15(c)), or shapes of an ellipse or an oval having a cutting edge 36 or a projection 37 (Fig. 15(d)).

Next, the process for manufacturing resin molded product according to the present embodiment will be described.

First of all, the hollow molded product 100, which has been previously produced, is supported by the support unit 15 of the resin molding apparatus 200. More specifically, the insertion portion 41 is inserted into the hollow molded product 100 from the neck portion 2 until the top edge of the neck portion 2 strikes the neck-struck metal fitting 42. Such action of the insertion is conducted by, for example, a working robot, which is not shown.
In addition to above, in this stage, as shown in Fig. 5 and Fig. 7, a pair of metallic mold members 11 and 12 are located on both sides of the hollow molded product 100.

Next, as shown in Fig. 6 and Fig. 8, a pair of metallic mold members 11 and 12 is moved toward each other to be mated together, so that the hollow molded product 100 is enclosed by the cavities 21 and 22. Since the condition of the neck portion pinching parts 13 and 14 being in contact with the pinched portion 4 along the outer circumference thereof as shown in Fig. 8 and Fig. 10(b) in the condition that the metallic mold members 11 and 12 are mated together, a wobble of the hollow molded product 100 around the axis of the neck portion 2 is preferably inhibited to provide the angle of the hollow molded product 100 around the axis with improved reproducibility and enhanced accuracy.

Here, actions in the situation where the rotation angle of the hollow molded product 100 against the metallic mold members 11 and 12 is misaligned at the stage of supporting the hollow molded product 100 by the support unit 15 will be described. In such case, as shown in Fig. 11(a) and Fig. 11(b), the corner 34 of the pinched portion 4 can be compressed by each of the inner circumference surfaces of the neck portion pinching parts 13 and 14 to correct the rotation angle of the pinched portion 4 around the axis of the neck portion 2 and eventually the rotation angle of the whole hollow molded product 100. As a result, as shown in Fig. 8 and Fig. 10(b), the neck portion pinching parts 13 and 14 are in the condition for being in contact with the pinched portion 4 along the outer circumference thereof. In addition to above, in such occasion, the corner 34 of the pinched portion 4 is pushed by the inner circumference surface of the neck portion pinching parts 13 and 14, so that a wedging of the corner 33 of the neck portion pinching parts 13 and 14 (Fig. 11(a)) into the outer circumference surface of the pinched portion 4 can be avoided.

Here, as shown in Fig. 8, the neck portion pinching parts 13 and 14 pinch only a portion of the pinched portion 4 that is closer to the top edge of the neck portion 2 than the groove 5. Thus, the groove 5 is housed within the cavities 21 and 22.

Next, the resin charging unit 16 charges the resin composing the resin cladding product 110 within the cavities 21 and 22 through the resin supply path 26 (Fig. 6). Here, the resin for filling is supplied to the cavities 21 and 22 at high temperature and at a predetermined pressure. Thus, in order to inhibit a deformation of the hollow molded product 100 caused by an influence of such heat and pressure, an internal pressure gas and a coolant are supplied to the interior of the hollow molded product 100 during the operation for supplying the resin. More specifically, the internal pressure gas is supplied in the inside of the hollow molded product 100 by the internal pressure gas supplying unit 17, so that the pressure in the hollow molded product 100 is increased so as to allow resisting the pressure exerted over the hollow molded product 100 from the outside, and the coolant is supplied in the inside of the hollow molded product 100 by the coolant supplying unit 18 so as to cool the hollow molded product 100 to a temperature for causing no thermal distortion of the hollow molded product 100. In addition, the internal pressure gas and the coolant are appropriately discharged from the inside of the hollow molded product 100 by the discharging unit 19 to avoid excessive increase of the internal pressure of the hollow molded product 100.

As described above, the resin is charged into the clearance between the cavities 21 and 22 and the hollow molded product 100 while appropriately adjusting the internal pressure and the temperature in the hollow molded product 100. In addition to above, the resin is charged from the periphery of the main body 1 to the periphery of the portion of the neck portion 2 that is closer to the main body 1 than the section thereof pinched by the neck portion pinching parts 13 and 14.

Here, functions and advantageous effects of the groove 5 during such resin supplying operation will be described in reference to Fig. 16. The resin introduced to the interior of the cavities 21 and 22 flows along the clearance between the cavities 21 and 22 and the hollow molded product 100 as shown by arrow I in Fig. 16, and eventually reaches to the vicinity of the neck portion 2. Here, the resin detours, for example, along the profile of the cavity 21 in the section of a shoulder of the main body 1. In such occasion, before the resin reaches to a position 51 in vicinity of the shoulder portion of the hollow molded product 100, the resin first of all travels toward a position 52 in vicinity of the neck portion pinching part 13 by the momentum of its flow along the above-described clearance, and may fill such position. As a result, the resin is turned from the position 52 in vicinity of the neck portion pinching part 13 back toward the direction indicated by arrow J along the pinched portion 4, and travels toward the position 51 in vicinity of the shoulder portion of the hollow molded product 100, and fills such position. As described above, it is considered that the position 51 in vicinity of the shoulder portion of the hollow molded product 100 is a position where voids are most easily remained, since the position is filled with the resin in the last instance.

Assuming such phenomenon, in the present embodiment, since the groove 5 is formed in the portion of the pinched portion 4 that is closer to the main body 1 than the section thereof pinched by the neck portion pinching parts 13 and 14, voids are rather easily remained in the groove 5, as compared with the position 51 in vicinity of the shoulder portion of the hollow molded product 100. Conversely, it can be configured that the inside of the groove 5 is filled with the resin in the last instance. Then, after the filling the inside of the cavities 21 and 22 with the resin is substantially completed, the resin is suctioned through the gas exhaust passage 28 to be discharged while further continuing the charge of the resin, so that, even if a void is remained in the groove 5, such void can be moved along the groove 5 as shown by arrow K, and then can be discharged together with the resin to the outside of the cavities 21 and 22. Thus, filling rate in the cavities 21 and 22 with the resin can be enhanced.

In addition, the pinched portion 4 is provided with the groove 5, such that the resin is filled in the groove 5 to provide enhanced anchor-effect of the resin cladding product 110 for the hollow molded product 100, so that an advantageous effect for inhibiting a detachment of the resin cladding product 110 from the hollow molded product 100 can be preferably obtained.

As described above, the cavities 21 and 22 are filled with the resin and then the resin is cooled to be hardened to achieve the overmolding of the resin cladding product 110 over the exterior of the hollow molded product 100. More specifically, the resin cladding product 110 is overmolded from the main body 1 to the periphery of the portion of the neck portion 2 that is closer to the main body 1 than the section thereof pinched by the neck portion pinching parts 13 and 14. In addition to above, the resin within the gas exhaust passage 28 and the resin supply path 26 is hardened integrally with the resin cladding product 110 to form a runner (not shown), and such runner is cut to be removed. As described above, the container 150 can be produced.

According to the above-described embodiment, when a pair of metallic mold members 11 and 12 are moved toward each other from a periphery of the hollow molded product 100 in the condition for rotatably supporting the hollow molded product 100 around the axis of the neck portion 2, a correction of the rotation angle of the hollow molded product 100 against a pair of metallic mold members 11 and 12 around the axis of the neck portion 2 can be achieved by simply pinching the pinched portion 4 of the neck portion 2 with the neck portion pinching parts 13 and 14. Thus, a wobble of the hollow molded product 100 in the overmolding process can be easily inhibited, and sufficient accuracy of the angle of the hollow molded product 100 over the metallic mold members 11 and 12 and the resin cladding product 110 and the reproducibility thereof in the overmolding process can be obtained.

While the above-described embodiment describes the exemplary implementations for conducting the overmolding process with a pair of metallic mold members 11 and 12, the quantity of the metallic mold members (number of division) may be three or more. In addition, while the exemplary implementations for employing a pair of metallic mold members 11 and 12 as the metallic mold members having the neck portion pinching part are described, each of three or more metallic mold members may also have a neck portion pinching part. In addition to above, the quantity of the metallic mold members (division number) and the quantity of the metallic mold members having the neck portion pinching part may be identical, or the quantity of the metallic mold members having the neck portion pinching part may be smaller than the quantity of the metallic mold members.

In addition to above, when the hollow molded product 100 is not made of a resin but of a material that is not deformable by a heat generated in the overmolding process such as, for example, a metal and the like, the internal pressure gas supplying unit 17, the coolant supplying unit 18 and the discharging unit 19 are not necessary for the resin molding apparatus 200.

The present application claims a priority based on the Japanese Patent Application No. 2009-166,344 filed July 15, 2009, the whole contents of disclosures thereof are hereby incorporated by reference.

## Claims

1. A resin molding apparatus, comprising:
a support unit, being capable of rotatably supporting a hollow molded product around an axis of a neck portion, said hollow molded product including a main body and said neck portion, said main body having a form of a container, and said neck portion having a cylindrical form and being in communication with said main body;
a set of metallic mold constituted of metallic mold members for leastwise enclosing said main body of said hollow molded product supported by said support unit by mating one of metallic mold members with the others; and
a resin charging unit for charging a resin into a cavity formed between said set of metallic mold member and said hollow molded product so as to form a resin cladding product over the outer surface of said hollow molded product via an overmolding process,
wherein said hollow molded product further includes a pinched portion, which is formed around said neck portion and is pinched by a plurality of metallic mold members of said set of metallic mold members,
wherein an outer profile of said pinched portion around an axis of said neck portion is defined to have a cross section of a non-circular profile that is perpendicular to the direction of an axis of said neck portion,
wherein each of said plurality of metallic mold members has a neck portion pinching part for pinching said pinched portion,
wherein an integrated inner profile of said neck portion pinching parts of said plurality of metallic mold members in the condition that said neck portion pinching parts are mated together is defined so as to be along said outer profile of said pinched portion, and
wherein, when a rotation angle of said hollow molded product supported by said support unit is misaligned around said axis, said neck portion pinching part pushes said pinched portion when said neck portion pinching part pinches said pinched portion to cause a rotation of said hollow molded product, while the mold members of said set of metallic mold disposed around said pinched portion are moved toward each other to be eventually mated together, thereby correcting the rotation angle around said axis.

2. The resin molding apparatus according to claim 1,
wherein said plurality of metallic mold members are a pair of metallic mold members, and
wherein the integrated inner profile of said neck portion pinching parts of said plurality of metallic mold members in the condition that said neck portion pinching parts are mated together is defined to be a tapered profile, in which the diameter of the profile is increased as approaching to a straight line that forms a boundary for separating said neck portion pinching parts in the condition that said pinched portion is pinched by said neck portion pinching parts.

3. The resin molding apparatus according to claim 2,
wherein the integrated inner profile of said neck portion pinching parts of said plurality of metallic mold members in the condition that said neck portion pinching parts are mated together and the outer profile of said pinched portion around the axis of said neck portion are defined to have a cross section of regular 2(n+1)-sided polygon (n is a positive integer number) that is perpendicular to the direction of the axis of said neck portion, and
wherein the inner profile of each of the neck portion pinching parts is formed to be conformable with one of successive (n+1) surfaces disposed around said axis in the outer circumference surface of said pinched portion around said axis.

4. The resin molding apparatus according to claim 2,
wherein said main body has a thicker direction and a thinner direction in a direction along a plane perpendicular to the axis direction of said neck portion,
wherein the integrated inner profile of said neck portion pinching parts of said plurality of metallic mold members in the condition that said neck portion pinching parts are mated together and the outer profile of said pinched portion around the axis of said neck portion are defined to have a cross section of regular 2m(2n+1)-sided polygon (n and m are positive integer numbers) that is perpendicular to the direction of the axis of said neck portion, and
wherein the inner profile of each of the neck portion pinching parts is formed to be conformable with one of successive m(2n+1) surfaces disposed around said axis in the outer circumference surface of said pinched portion around said axis.
wherein two sides of regular 2m(2n+1)-sided polygon mutually faces in said thinner direction.

5. The resin molding apparatus according to claim 2 or 4,
wherein the integrated inner profile of said neck portion pinching parts of said plurality of metallic mold members in the condition that said neck portion pinching parts are mated together and the outer profile of said pinched portion around the axis of said neck portion are defined to have a cross section of regular hexagon that is perpendicular to the direction of the axis of said neck portion, and
wherein the inner profile of each of the neck portion pinching parts is formed to be conformable with successive three surfaces of said pinched portion disposed around said axis in the outer circumference surface of said pinched portion around said axis.

6. The resin molding apparatus according to any one of claims 1 to 5,
wherein said pinched portion is formed at an end of said neck portion in the side of said main body,
wherein a trench travelling around the axis of said neck portion is formed in said pinched portion,
wherein said neck portion pinching part pinches a section of said pinched portion that is closer to a top end of said neck portion than said trench, and
wherein said resin charging unit forms said resin cladding product that extends from said main body to the section of said neck portion, which is closer to said main body than the section pinched by said neck portion pinching part, via an overmolding process.

7. A process for manufacturing a resin molded product, including:
a first step for rotatably supporting a hollow molded product around an axis of a neck portion, said hollow molded product including a main body and said neck portion, said main body having a form of a container, and said neck portion having a cylindrical form and being in communication with said main body;
a second step for moving metallic mold members of a set of a metallic mold toward each other from a periphery of said hollow molded product to be eventually mated together to leastwise enclose said main body of said hollow molded product by mating one of said metallic mold with the others; and
a third step for charging a resin into a cavity formed between said set of metallic mold and said hollow molded product so as to form a resin cladding product over the outer surface of said hollow molded product via an overmolding process,
wherein said hollow molded product further includes a pinched portion, which is formed around said neck portion and is pinched by a plurality of metallic mold members of said set of metallic mold,
wherein an outer profile of said pinched portion around an axis of said neck portion is defined to have a cross section of a non-circular profile that is perpendicular to the direction of an axis of said neck portion,
wherein each of said plurality of metallic mold members has a neck portion pinching part for pinching said pinched portion, wherein an integrated inner profile of said neck portion pinching parts of said plurality of metallic mold members in the condition that said neck portion pinching parts are mated together is defined so as to be along said outer profile of said pinched portion, and
wherein, in said second step, said neck portion pinching part pushes said pinched portion when said neck portion pinching part pinches said pinched portion to cause a rotation of said hollow molded product, while the mold members of said set of metallic mold are moved toward each other to be mated together in said moving metallic mold members to be eventually mated together, thereby correcting the rotation angle around said axis.

8. The process for manufacturing the resin molded product according to claim 7, wherein an internal circumference surface of said neck portion pinching part pushes a corner of said pinched portion to cause a rotation of said hollow molded product in said second step for moving said metallic mold members to be eventually mated together.

9. A hollow molded product, including:
a main body having a form of a container;
a neck portion having a cylindrical form and being in communication with said main body; and
a pinched portion formed around said neck portion and being pinched by a neck portion pinching part included in the respective metallic mold members,
wherein an outer profile of said pinched portion around an axis of said neck portion is defined to have a cross section of a non-circular profile that is perpendicular to a direction of an axis of said neck portion, and is also formed so that the pinched portion is pushed by said neck portion pinching part to cause a rotation of the hollow molded product, when said metallic mold members respectively disposed in the periphery of said pinched portion are moved toward each other to be eventually mated together and said neck portion pinching part pinches said pinched portion, so that a rotation angle of the hollow molded product for said plurality of metallic mold members is corrected around said axis.

10. The hollow molded product according to claim 9,
wherein said pinched portion is pinched by said neck portion pinching part included in each of a pair of metallic mold members, and
wherein the outer profile of said pinched portion around the axis of said neck portion is defined to be a tapered profile, in which the diameter of the profile is increased as approaching to a straight line that forms a boundary for separating said neck portion pinching part in the condition that said pinched portion is pinched by said neck portion pinching part of said pair of metallic mold members.

11. The hollow molded product according to claim 10, wherein said outer profile is defined to have a cross section of regular hexagon that is perpendicular to the direction of the axis of said neck portion.

12. The hollow molded product according to any one of claims 9 to 11, wherein said pinched portion is formed at an end of said neck portion in the side of said main body.

13. The hollow molded product according to claim 12, wherein a trench travelling around the axis of said neck portion is formed in said pinched portion.

14. The hollow molded product according to any one of claims 9 to 13, wherein a section of said pinched portion pushed by said neck portion pinching part for rotation is beveled.

15. A container including:
a hollow molded product including a main body having a form of a container and a neck portion having a cylindrical form and being in communication with said main body, and a cap installing portion, which is formed in said neck portion and on which a cap is installed; and
a resin cladding product leastwise provided integrally with said main body in the outside of said main body,
wherein an outer profile of said neck portion around an axis of at least a section of said neck portion except said cap installing portion is defined to have a cross section of a non-circular profile that is perpendicular to the direction of an axis of said neck portion, and said section is exposed from said resin cladding product,
wherein any one of first condition and second condition is satisfied and any one of third condition and fourth condition is satisfied,
wherein the first condition includes that the outer profile of said main body is defined to have a cross section of a non-circular profile that is perpendicular to the direction of an axis of said neck portion,
wherein the second condition includes that a decoration is provided in a specific location of said main body around the axis of said neck portion and said decoration is visible from the outside of the container through said resin cladding product,
wherein the third condition includes that the outer profile of said resin cladding product is defined to have a cross section of a non-circular profile that is perpendicular to the direction of the axis of said neck portion, and
wherein the fourth condition includes that a decoration, which is visible from the outside of the container, is provided in a specific location of said resin cladding product around the axis of said neck portion.
